(19) Europäisches Patentamt
European Patent Office
Office européen des brevets

(11) **EP 4 611 077 A1**

(12) **EUROPEAN PATENT APPLICATION**
published in accordance with Art. 153(4) EPC

(43) Date of publication:
**03.09.2025 Bulletin 2025/36**

(21) Application number: **23907705.0**

(22) Date of filing: **20.12.2023**

(51) International Patent Classification (IPC):
$H01M\ 4/70^{(2006.01)}$    $H01M\ 10/058^{(2010.01)}$
$H01M\ 4/66^{(2006.01)}$    $H01M\ 4/525^{(2010.01)}$
$H01M\ 4/131^{(2010.01)}$    $H01M\ 10/42^{(2006.01)}$
$H01M\ 10/052^{(2010.01)}$    $H01M\ 4/02^{(2006.01)}$

(52) Cooperative Patent Classification (CPC):
**H01M 4/02; H01M 4/131; H01M 4/525; H01M 4/66;
H01M 4/70; H01M 10/052; H01M 10/058;
H01M 10/42; Y02E 60/10**

(86) International application number:
**PCT/KR2023/021041**

(87) International publication number:
**WO 2024/136422 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220181138**

(71) Applicant: **LG Energy Solution, Ltd.
Seoul 07335 (KR)**

(72) Inventors:
• **JEON, Boo Sik
  Daejeon 34122 (KR)**
• **JO, Mi Ru
  Daejeon 34122 (KR)**
• **PARK, Sung Bin
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ANODE-FREE BATTERY**

(57)    Provided is a negative electrode-free battery which includes: a positive electrode; a negative electrode facing the positive electrode; a separator interposed between the positive electrode and the negative electrode; and an electrolyte, wherein the positive electrode includes a positive electrode active material, the positive electrode active material includes a lithium transition metal oxide, the negative electrode includes a negative electrode current collector for a negative electrode-free battery, the negative electrode current collector for a negative electrode-free battery includes a metal current collecting substrate, the metal current collecting substrate includes a space portion, at least a portion of which is exposed to the outside, and a specific relational formula is satisfied.

[FIG. 1]

**Description**

[Technical Field]

Cross-Reference to Related Application

This application claims priority to and the benefit of Korean Patent Application No. 10-2022-0181138, filed on December 21, 2022, the disclosures of which are incorporated herein by reference in their entireties.

Technical Field

The present invention relates to a negative electrode-free battery.

[Background Art]

Recently, as personal IT devices and computer networks have developed due to the development of an information society, overall society's dependence on electrical energy has increased, and accordingly, there is a need for the development of battery technologies to efficiently store and utilize electrical energy.

Particularly, as interest in solving environmental problems and realizing a sustainable and circular society increases, research on power storage devices such as lithium ion batteries and electric double-layer capacitors is being extensively conducted. Among battery technologies, lithium secondary batteries are attracting attention as a battery system having the highest theoretical energy density.

In general, the lithium secondary battery has a structure in which an electrode assembly consisting of a positive electrode, a negative electrode, and a separator is impregnated with an electrolyte. Also, the positive electrode is typically manufactured by applying a positive electrode mixture including a positive electrode active material onto aluminum foil, and the negative electrode is manufactured by applying a negative electrode mixture including a negative electrode active material onto copper foil. Here, a lithium transition metal oxide is typically used as the positive electrode active material, and a carbon-based active material, a silicon-based active material, or the like is used as the negative electrode active material.

Recently, lithium metal batteries that use lithium metal itself as a negative electrode active material have been commercialized, and furthermore, negative electrode-free batteries (anode-free batteries), which use only a negative electrode current collector as a negative electrode and use, as a negative electrode active material, lithium metal provided from a positive electrode through charging, are being studied. Since the negative electrode-free battery does not include a negative electrode mixture layer, the inclusion of a larger amount of the positive electrode mixture layer is possible, and thus it is preferable in terms of high energy density.

However, when the negative electrode-free battery is charged, there is a concern that lithium dendrites may be formed after lithium provided from a positive electrode is electrodeposited on a negative electrode current collector. The negative electrode-free battery may have a problem such as decreased charge/discharge efficiency due to an increase in irreversible capacity resulting from the formation of lithium dendrites. Also, when the negative electrode-free battery is charged, the lithium metal layer formed on the negative electrode current collector has low electrodeposition density, and thus electrolyte side reactions may occur, which may lead to rapid degradation of lifespan performance.

Although Korean Unexamined Patent Publication No. 10-2019-0083878 discloses a negative electrode-free lithium metal battery, it fails to address the above-described problem.

[Related Art Documents]

[Patent Documents]

Korean Unexamined Patent Publication No. 10-2019-0083878

[Disclosure]

[Technical Problem]

The present invention is directed to providing a negative electrode-free battery whose charge/discharge efficiency and lifespan performance are improved by suppressing the formation of lithium dendrites during charging and discharging.

[Technical Solution]

One aspect of the present invention provides a negative electrode-free battery which includes: a positive electrode; a negative electrode facing the positive electrode; a separator interposed between the positive electrode and the negative electrode; and an electrolyte, wherein the positive electrode includes a positive electrode active material, the positive electrode active material includes a lithium transition metal oxide, the negative electrode includes a negative electrode current collector for a negative electrode-free battery, the negative electrode current collector for a negative electrode-free battery includes a metal current collecting substrate, the metal current collecting substrate includes a space portion, at least a portion of which is exposed to an outside, and the following Mathematical Formula 1 is satisfied.

[Mathematical Formula 1]

$$0.7\text{V} \leq (\text{n} \times \text{L} \times \text{V}_{\text{Li}}) / \text{M}_{\text{p}} \leq 2.0\text{V}$$

In Mathematical Formula 1, V is a volume (units: ml) of the space portion, n is a value (unitless) calculated by the following Mathematical Formula 2, L is a loading weight (units: g) of the positive electrode active material in the positive electrode, $V_{\text{Li}}$ is a volume per 1 mole of lithium metal (units: ml/mol), and $M_{\text{p}}$ is a molar mass (units: g/mol) of the lithium transition metal oxide.

[Mathematical Formula 2]

$$\text{n} = \text{C}_{\text{H}} \times \text{M}_{\text{p}} \times 1/96485 \text{ mol/C} \times 3600 \text{ s/h}$$

In Mathematical Formula 2, $C_{\text{H}}$ is a capacity (units: Ah/g) of a half-cell manufactured using the positive electrode and a lithium metal counter electrode, $M_{\text{p}}$ is a molar mass (units: g/mol) of the lithium transition metal oxide, C represents coulombs, s represents seconds, and h represents hours.

[Advantageous Effects]

A negative electrode-free battery according to the present invention is characterized in that the battery includes a positive electrode and a negative electrode, the positive electrode includes a positive electrode active material including a lithium transition metal oxide, a negative electrode current collector for a negative electrode-free battery, which does not include a negative electrode active material containing carbon, silicon, or the like, is used as the negative electrode, the negative electrode current collector for a negative electrode-free battery includes a metal current collecting substrate having a space portion formed so that at least a portion thereof is exposed to the outside, and the relational formula (Mathematical Formula 1) for the volume of the space portion and the volume of lithium of the lithium transition metal oxide in the positive electrode is satisfied. Since the negative electrode-free battery of the present invention satisfies above relational formula, lithium from the positive electrode can be smoothly plated in the space portion of the metal current collecting substrate, which can result in less expansion of the negative electrode and minimal formation of lithium dendrites. Accordingly, the negative electrode-free battery according to the present invention can secure safety by suppressing the formation of lithium dendrites and exhibit improved energy density and excellent levels of charge/-discharge efficiency and lifespan performance.

[Description of Drawings]

FIG. 1 is a schematic side view of a negative electrode according to an embodiment of the present invention.
FIG. 2 is a schematic perspective view of a negative electrode according to an embodiment of the present invention.
FIG. 3 is a schematic side view of a negative electrode according to another embodiment of the present invention.

[Modes of the Invention]

Terms and words used in this specification and the claims should not be interpreted as limited to commonly used meanings or meanings in dictionaries and should be interpreted with meanings and concepts which are consistent with the technological scope of the present invention based on the principle that the inventors can appropriately define concepts of terms in order to describe the invention in the best way.

It should be understood that the terms "comprises," "comprising," "includes," "including," "has," and/or "having," when used herein, specify the presence of stated features, numbers, steps, operations, elements, components and/or combinations thereof, but do not preclude the presence or addition of one or more other features, numbers, steps, operations, elements, components and/or combinations thereof.

In this specification, an average particle diameter ($D_{50}$) may be defined as a particle diameter corresponding to 50% of the cumulative volume in the particle diameter distribution curve. The average particle diameter ($D_{50}$) may be measured, for example, using a laser diffraction method. The laser diffraction method generally enables measurement of a particle diameter ranging from submicrons to several mm, and may obtain a result with high reproducibility and high resolvability.

**Negative electrode-free battery**

The present invention provides a negative electrode-free battery. Specifically, the negative electrode-free battery may be a negative electrode-free lithium secondary battery.

Specifically, the negative electrode-free battery according to the present invention includes: a positive electrode; a negative electrode facing the positive electrode; a separator interposed between the positive electrode and the negative electrode; and an electrolyte, wherein the positive electrode includes a positive electrode active material, the positive electrode active material includes a lithium transition metal oxide, the negative electrode includes a negative electrode current collector for a negative electrode-free battery, the negative electrode current collector for a negative electrode-free battery includes a metal current collecting substrate, the metal current collecting substrate includes a space portion, at least a portion of which is exposed to an outside, and the following Mathematical Formula 1 is satisfied.

$$[\text{Mathematical Formula 1}]$$

$$0.7\text{V} \leq (\text{n} \times \text{L} \times \text{V}_{\text{Li}}) / \text{M}_{\text{p}} \leq 2.0\text{V}$$

In Mathematical Formula 1, V is a volume (units: ml) of the space portion, n is a value (unitless) calculated by the following Mathematical Formula 2, L is a loading weight (units: g) of the positive electrode active material in the positive electrode, $V_{\text{Li}}$ is a volume per 1 mole of lithium metal (units: ml/mol), and $M_{\text{p}}$ is a molar mass (units: g/mol) of the lithium transition metal oxide.

$$[\text{Mathematical Formula 2}]$$

$$\text{n} = \text{C}_{\text{H}} \times \text{M}_{\text{p}} \times 1/96485 \text{ mol/C} \times 3600 \text{ s/h}$$

In Mathematical Formula 2, $C_{\text{H}}$ is a capacity (units: Ah/g) of a half-cell manufactured using the positive electrode and a lithium metal counter electrode, $M_{\text{p}}$ is a molar mass (units: g/mol) of the lithium transition metal oxide, C represents coulombs, s represents seconds, and h represents hours.

The negative electrode-free battery according to the present invention is characterized in that the battery includes a positive electrode and a negative electrode, the positive electrode includes a positive electrode active material including a lithium transition metal oxide, a negative electrode current collector for a negative electrode-free battery, which does not include a negative electrode active material containing carbon, silicon, or the like, is used as the negative electrode, the negative electrode current collector for a negative electrode-free battery includes a metal current collecting substrate having a space portion formed so that at least a portion thereof is exposed to the outside, and the relational formula (Mathematical Formula 1) for the volume of the space portion and the volume of lithium of the lithium transition metal oxide in the positive electrode is satisfied. Since the negative electrode-free battery of the present invention satisfies the above relational formula, lithium from the positive electrode may be smoothly plated in the space portion of the metal current collecting substrate, which may result in less expansion of the negative electrode and minimal formation of lithium dendrites. Accordingly, the negative electrode-free battery according to the present invention can secure safety by suppressing the formation of lithium dendrites and exhibit improved energy density and excellent levels of charge/discharge efficiency and lifespan performance.

The negative electrode-free battery according to the present invention includes: a positive electrode; a negative electrode disposed to face the positive electrode; a separator interposed between the positive electrode and the negative electrode; and an electrolyte. Specifically, the negative electrode-free battery may be manufactured by placing an electrode assembly including a positive electrode, a negative electrode disposed to face the positive electrode, and a separator interposed between the positive electrode and the negative electrode in a battery case and then injecting an electrolyte.

Positive electrode

The positive electrode includes a positive electrode active material.

The positive electrode active material includes a lithium transition metal oxide.

The lithium transition metal oxide is a compound capable of reversible intercalation and deintercalation of lithium. Specifically, the lithium transition metal oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-iron-phosphorus-based oxide (e.g., $LiFePO_4$), a lithium-nickel-manganese-based oxide (e.g., $LiNi_{1-Y}Mn_YO_2$ (where 0<Y<1), $LiMn_{2-z}Ni_zO_4$ (where 0<Z<2), etc.), a lithium-nickel-cobalt-based oxide (e.g., $LiNi_{1-Y1}Co_{Y1}O_2$ (where 0<Y1<1), etc.), a lithium-manganese-cobalt-based oxide (e.g., $LiCo_{1-Y2}Mn_{Y2}O_2$ (where 0<Y2<1), $LiMn_{2-z1}Co_{z1}O_4$ (where 0<Z1<2), etc.), a lithium-nickel-manganese-cobalt-based oxide (e.g., $Li(Ni_pCo_qMn_{r1})O_2$ (where 0<p<1, 0<q<1, 0<r1<1, p+q+r1=1), $Li(Ni_{p1-}Co_{q1}Mn_{r2})O_4$ (where 0<p1<2, 0<q1<2, 0<r2<2, p1+q1+r2=2), etc.), or a lithium-nickel-cobalt-transition metal (M) oxide (e.g., $Li(Ni_{p2}Co_{q2}Mn_{r3}M_{S2})O_2$ (where M is selected from the group consisting of Al, Fe, V, Cr, Ti, Ta, Mg, and Mo, p2, q2, r3, and s2 are respective atomic fractions of elements and satisfy 0<p2<1, 0<q2<1, 0<r3<1, 0<s2<1, and p2+q2+r3+s2=1), etc.), and any one or a mixture of two or more thereof may be used. Among those listed above, in view of increasing the capacity characteristics and stability of the battery, the lithium transition metal oxide may be $LiCoO_2$, $LiMnO_2$, $LiNiO_2$, a lithium-nickel-manganese-cobalt-based oxide (e.g., $Li(Ni_{0.6}Mn_{0.2}Co_{0.2})O_2$, $Li(Ni_{0.5}Mn_{0.3}Co_{0.2})O_2$, $Li(Ni_{0.8}Mn_{0.1}Co_{0.1})O_2$, etc.), a lithium-nickel-cobalt-aluminum-based oxide (e.g., $Li(Ni_{0.8}Co_{0.15}Al_{0.05})O_2$, etc.), or the like.

The positive electrode may include a positive electrode current collector; and a positive electrode active material layer disposed on at least one surface of the positive electrode current collector. In this case, the positive electrode active material layer may include the above-described positive electrode active material.

The positive electrode active material layer may be disposed on at least one surface of the positive electrode current collector, and specifically, on one surface or both surfaces of the positive electrode current collector.

The positive electrode active material layer may include the positive electrode active material in an amount of 80 wt% to 99 wt%.

In addition to the above-described positive electrode active material, the positive electrode active material layer may optionally further include at least one additive selected from the group consisting of a binder and a conductive material.

The binder is a component that assists the bonding of the positive electrode active material and the conductive material and the bonding to the current collector, and is typically added in an amount of 1 to 30 wt% based on the total weight of the positive electrode active material layer. Examples of the binder include polyvinylidene fluoride, polyvinyl alcohol, carboxymethylcellulose (CMC), starch, hydroxypropyl cellulose, regenerated cellulose, polyvinylpyrrolidone, polytetrafluoroethylene, polyethylene, polypropylene, an ethylenepropylene-diene terpolymer (EPDM), a sulfonated EPDM, styrene butadiene rubber, fluororubber, and various copolymers.

The conductive material is not particularly limited as long as it does not cause chemical changes in the battery and has conductivity, and for example, a carbon-based material such as graphite, carbon black, acetylene black, Ketjen black, channel black, furnace black, lamp black, thermal black, or the like; a conductive fiber such as carbon fiber, metal fiber, or the like; a metal powder such as fluorinated carbon powder, aluminum powder, nickel powder or the like; a conductive whisker such as zinc oxide, potassium titanate or the like; a conductive metal oxide such as titanium oxide or the like; or a conductive material such as a polyphenylene derivative or the like may be used. Specific examples of commercially available conductive materials include acetylene black-based products (Chevron Chemical Company), Denka black (Denka Singapore Private Limited), Gulf Oil Company products, Ketjen black, EC-based products (Armak Company), Vulcan XC-72 (Cabot Company), Super P (MMM Carbon) and the like.

The conductive material may be included in an amount of 1 to 30 wt% based on the total weight of the positive electrode active material layer.

The positive electrode active material layer may be manufactured by adding a positive electrode active material and an optional additive including a binder and/or a conductive material to a solvent to prepare a positive electrode slurry, applying the slurry onto the positive electrode current collector, followed by rolling and drying.

The solvent may include an organic solvent such as N-methyl-2-pyrrolidone (NMP) or the like and may be used in an amount that exhibits preferable viscosity when the positive electrode active material and an optional binder and conductive material are included. For example, the solvent may be included so that the concentration of solids including the positive electrode active material, and the optional binder and conductive material is 50 wt% to 95 wt%, and preferably, 70 wt% to 90 wt%.

Negative electrode

Hereinafter, the negative electrode included in the negative electrode-free battery of the present invention will be described in detail with reference to the drawings. In giving reference numerals to components of the drawings, it should be noted that the same components have the same reference numerals as much as possible although being shown in different drawings. Further, in the description of embodiments of the present invention, a detailed description of known functions and configurations incorporated herein will be omitted to avoid making the subject matter of the present invention unclear.

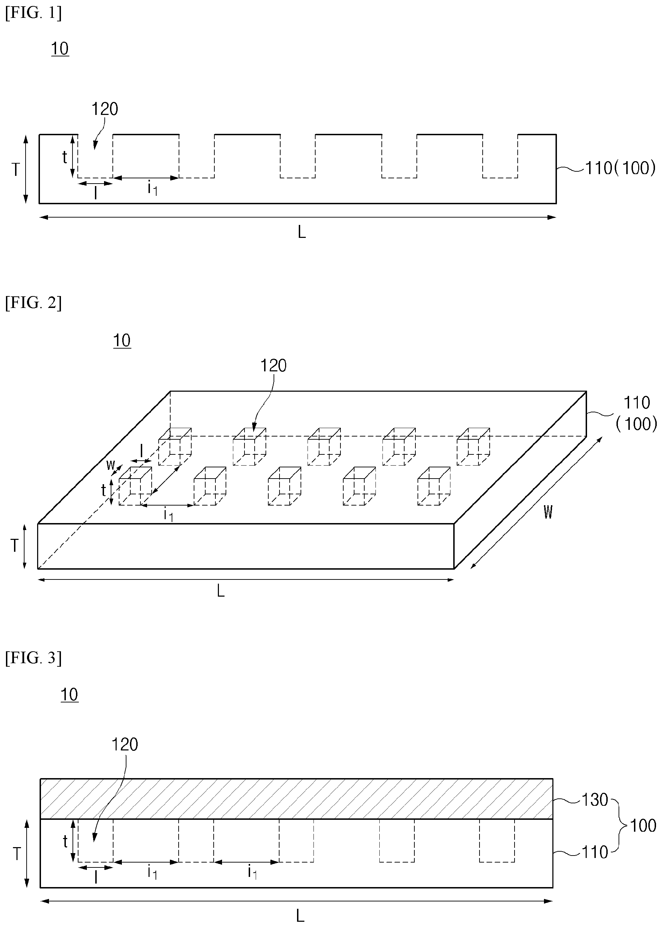

Specifically, FIG. 1 is a schematic side view of a negative electrode according to an embodiment of the present invention, and FIG. 2 is a schematic perspective view of the negative electrode.

A negative electrode 10 is disposed to face the positive electrode (not shown).

Referring to FIGS. 1 and 2, the negative electrode 10 includes a negative electrode current collector 100 for a negative electrode-free battery. More specifically, the negative electrode 10 may be composed of the negative electrode current collector 100 for a negative electrode-free battery. When the negative electrode is manufactured, a separate negative electrode active material layer including a negative electrode active material such as a carbon-based active material, a silicon-based active material, or the like may not be formed. The negative electrode current collector for a negative electrode-free battery does not include a separate lithium intercalating material or lithium metal, and may be assembled into an electrode assembly and a negative electrode-free battery along with the positive electrode, the separator, and the like. When a negative electrode-free battery including the negative electrode current collector for a negative electrode-free battery is charged, lithium ions may move from a positive electrode to a negative electrode and then may be electrodeposited on the surface of a metal current collecting substrate or a space portion. As the lithium electrodeposited on the negative electrode moves back to the positive electrode, the negative electrode-free battery may be discharged.

The negative electrode current collector 100 for a negative electrode-free battery includes a metal current collecting substrate 110.

The metal current collecting substrate 110 is not particularly limited as long as it does not cause chemical changes in the battery and has high conductivity. Specifically, the metal current collecting substrate 110 may include at least one selected from the group consisting of copper, stainless steel, aluminum, nickel, titanium, and an aluminum-cadmium alloy, and specifically, copper.

A thickness $T$ of the metal current collecting substrate 110 may be 3 $\mu$m to 500 $\mu$m. In consideration of both high energy density and mechanical strength, the thickness may specifically be 3 $\mu$m to 100 $\mu$m, and more specifically, 30 $\mu$m to 80 $\mu$m.

The metal current collecting substrate may be used in any of various forms such as a film, a sheet, a foil, a net, a mesh, a porous material, a foam, a non-woven fabric, and the like. Specifically, the metal current collecting substrate may be in the form of a sheet, and specifically, a sheet having predetermined length L, width W, and thickness T values as shown in FIGS. 1 and 2.

The metal current collecting substrate 110 includes a space portion 120 at least a portion of which is exposed to the outside.

At least a portion of the space portion 120 is exposed to the outside, and accordingly, when the negative electrode-free battery is charged, lithium ions moving from the positive electrode to the negative electrode may be plated in the space portion.

There may be a plurality of space portions. In this case, the plurality of space portions may be disposed to be spaced apart from each other. Specifically, the plurality of space portions may be disposed to be spaced apart from each other by a predetermined spacing $i_1$ and $i_2$.

When there are a plurality of space portions, the plurality of space portions may each independently have a volume of 0.000025 ml to 0.01 ml, specifically 0.00005 ml to 0.0025 ml, and more specifically 0.0005 ml to 0.0015 ml. Within the above range, lithium ions provided from the positive electrode may be smoothly dispersed and plated in the plurality of space portions.

A percentage of the volume of the space portion 120 relative to the volume of the metal current collecting substrate 110 may be 20% to 60%, specifically 25% to 55%, and more specifically 32% to 45%. Within the above range, lithium ions may be stably plated in the space portion while securing the rigidity of the metal current collecting substrate as much as possible. When there are a plurality of space portions 120, a percentage of the volume of the space portion 120 relative to the volume of the metal current collecting substrate 110 may refer to a percentage of the total volume of the plurality of space portions 120 relative to the volume of the metal current collecting substrate 110.

There is no particular limitation on the shape of the space portion 120, and for example, the space portion may have a shape selected from a concave shape, a cylindrical shape, and a rectangular parallelepiped shape. When there are a plurality of space portions, the plurality of space portions may each independently have a shape selected from a concave shape, a cylindrical shape, and a rectangular parallelepiped shape. When the space portion 120 has a shape selected from a concave shape, a cylindrical shape, and a rectangular parallelepiped shape, the upper surface of the space portion may be exposed to the outside. For example, when the space portion 120 has a rectangular parallelepiped shape as shown in FIGS. 1 and 2, the length l, width w, and thickness t of the space portion may be appropriately designed in consideration of the relationship of Mathematical Formula 1, a percentage of the volume of the space portion relative to the volume of the metal current collecting substrate, and the like. Alternatively, the space portion may penetrate the metal current collecting substrate.

The space portion 120 may be formed using a method such as pin rolling, laser ablation, chemical etching, plating, mechanical scratching, and the like after a sheet-type metal current collecting substrate is prepared, but the present invention is not limited thereto.

According to the negative electrode-free battery of the present invention, the negative electrode-free battery satisfies the following Mathematical Formula 1.

$$[\text{Mathematical Formula 1}]$$

$$0.7V \leq (n \times L \times V_{Li}) / M_p \leq 2.0V$$

In Mathematical Formula 1, V is a volume (units: ml) of the space portion, n is a value (unitless) calculated by the following Mathematical Formula 2, L is a loading weight (units: g) of the positive electrode active material in the positive electrode, $V_{Li}$ is a volume per 1 mole of lithium metal (units: ml/mol), and $M_p$ is a molar mass (units: g/mol) of the lithium transition metal oxide.

$$[\text{Mathematical Formula 2}]$$

$$n = C_H \times M_p \times 1/96485 \text{ mol/C} \times 3600 \text{ s/h}$$

In Mathematical Formula 2, $C_H$ is a capacity (units: Ah/g) of a half-cell manufactured using the positive electrode and a lithium metal counter electrode, $M_p$ is a molar mass (units: g/mol) of the lithium transition metal oxide, C represents coulombs, s represents seconds, and h represents hours.

n described in Mathematical Formula 1 is a value calculated by Mathematical Formula 2 and may be understood as the number of electrons transferred per 1 mole of the lithium transition metal oxide. Also, "$(n \times L \times V_{Li})/M_p$" described in Mathematical Formula 1 may be understood as the maximum volume of lithium transferred from the positive electrode active material in the positive electrode.

When "$(n \times L \times V_{Li})/M_p$" satisfies 0.7 to 2.0 times the space portion volume (V), the lifespan performance and safety of the negative electrode-free battery can be significantly improved. A case in which "$(n \times L \times V_{Li})/M_p$" is less than 0.7 times the space portion volume (V) is not preferable in that intensive lithium plating in the space portion is degraded, and thus it is difficult to achieve the purpose of the present invention, which is to suppress dendrite formation. Meanwhile, a case in which "$(n \times L \times V_{Li})/M_p$" is more than 2.0 times the space portion volume (V) is not preferable in that the rigidity of the current collector is excessively low, and thus the durability of the electrode and battery is degraded.

Specifically, "$(n \times L \times V_{Li})/M_p$" may be 0.75 to 1.60 times, more specifically 0.85 to 1.50 times, and even more specifically 0.9 to 1.3 times the space portion volume (V). In this case, the above-described intensive lithium plating in the space portion, lifespan performance, and durability of the current collector can be improved. In other words, Mathematical Formula 1 may be modified into the following Mathematical Formula 1-1.

$$[\text{Mathematical Formula 1-1}]$$

$$0.75V \leq (n \times L \times V_{Li})/M_p \leq 1.60V$$

When there are a plurality of space portions, the space portion volume V of Mathematical Formula 1 may refer to the total volume of the plurality of space portions.

Hereinafter, a negative electrode according to another embodiment of the present invention will be described with reference to FIG. 3. FIG. 3 is a schematic side view of a negative electrode according to another embodiment of the present invention.

Referring to FIG. 3, the negative electrode current collector 100 for a negative electrode-free battery 100 may further include a polymer coating layer 130 disposed on at least one surface of the metal current collecting substrate 110. The polymer coating layer 130 may be disposed on the metal current collecting substrate 110 to prevent the expansion of a lithium metal layer that may be disposed on the surface of the metal current collecting substrate 110 or in the space portion or effectively suppress the formation of lithium dendrites. Particularly, when the polymer coating layer 130 is included in the negative electrode current collector 100 for a negative electrode-free battery 100, an effect of improving the lifespan performance and safety of the negative electrode-free battery according to Mathematical Formula 1 may be more effectively exhibited.

The polymer coating layer 130 may be positioned on at least one surface of the metal current collecting substrate 110, and specifically, on one surface or both surfaces of the metal current collecting substrate.

The polymer coating layer 130 may be disposed to face the separator (not shown). Specifically, the polymer coating layer 130 may be disposed on the upper surface of the negative electrode current collector for a negative electrode-free battery.

The polymer coating layer 130 may include at least one polymer selected from the group consisting of an acrylic polymer, polyurethane, polyurea, polyvinyl chloride, polyethylene oxide, polyacrylamide, polyacrylonitrile, polysaccharide, PEDOT:PSS, styrene-butadiene rubber, polyimide, polyvinylidene fluoride, a polyvinylidene fluoride-hexafluoro propylene copolymer, a polyvinylidene fluoride-chlorotrifluoroethylene copolymer, carboxymethyl cellulose, methyl cellulose, hydroxyethyl cellulose, hydroxypropyl cellulose, polypyrrole, and polystyrene. Preferably, in terms of excellent electrolyte impregnability, high ionic conductivity, the stable electrodeposition of lithium ions on the metal current collecting substrate, and the suppression of lithium dendrite growth, the polymer coating layer may include at least one selected from the group consisting of polyvinylidene fluoride, a polyvinylidene fluoride-hexafluoro propylene copolymer, and a polyvinylidene fluoride-chlorotrifluoroethylene copolymer.

The polymer coating layer 130 may further include at least one additive selected from a lithium compound and a porous filler in addition to the polymer.

The lithium compound may contribute to the formation of a solid electrolyte interphase layer (SEI layer) on the surface of the negative electrode current collector during initial charging, and accordingly, it may contribute to improving the ionic conductivity of the coating layer and lifespan performance.

The lithium compound may include at least one selected from the group consisting of a lithium salt and a lithium ion conductor, and more specifically, a lithium salt.

The lithium salt may include at least one selected from the group consisting of $LiCl$, $LiBr$, $LiI$, $LiNO_3$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $LiSCN$, $LiC(CF_3SO_2)_3$, $(CF_3SO_2)_2NLi$, $(FSO_2)_2NLi$, $Li_3BO_3$, $Li_2B_4O_7$, and $LiBO_2$, and more specifically, $LiNO_3$ in terms of promoting the formation of a stable SEI layer having a large amount of inorganic material such as $Li_3N$, $Li_2O$, or the like on the surface of the negative electrode current collector, and forming plated lithium metal with a spherical surface, thereby suppressing the formation of lithium dendrites.

The lithium ion conductor may include at least one selected from the group consisting of an oxide-based lithium ion conductor, a phosphate-based lithium ion conductor, a nitride-based lithium ion conductor, and a sulfide-based lithium ion conductor.

The oxide-based lithium ion conductor may include at least one selected from the group consisting of a LLZO-based compound (Li-La-Zr-O-based compound, for example, $Li_7La_3Zr_2O_{12}$), a LLZTO-based compound (Li-La-Zr-Ta-O-based compound, for example, $Li_{6.4}La_3Zr_{1.4}Ta_{0.6}O_{12}$), a LLTO-based compound (Li-La-Ti-O-based compound, for example, a compound represented by $Li_{3p}La_{2/3-p}TiO_3$ (where $0<p<0.16$)), and a LISICON ( lithium super ionic conductor, for example, a compound represented by $Li_{2+w}Zn_{1-w}GeO_4$ (where $0<w\leq1$)).

The phosphate-based lithium ion conductor may include at least one selected from the group consisting of a LZPO-based compound ( Li-Zr-P-O-based compound, for example, $LiZr_2(PO_4)_3$), a LZSP-based compound ( Li-Zr-Si-P-O-based compound, for example, $Li_3Zr_2Si_2PO_{12}$), a LTPO-based compound (Li-Ti-P-O-based compound, for example, $LiTi_2(PO_4)_3$), and a LATP-based compound ( Li-Al-Ti-P-O-based compound, for example, a compound represented by $Li_{1+q}Al_qTi_{2-q}(PO_4)_3$ (where $0.3 \leq q \leq 0.5$)).

The nitride-based lithium ion conductor may include at least one selected from the group consisting of a LiPON ( lithium phosphorous oxynitride), $Li_3N$, and $Li_3AlN_2$.

The sulfide-based lithium ion conductor may include at least one selected from the group consisting of $Li_2S$-$P_2S_5$, $Li_3PS_4$, a Li-Ge-P-S-based compound (LGPS-based compound, for example, $Li_{10}GeP_2S_{12}$), and thio-LISICON (some oxygen atoms of LISICON are substituted with sulfur).

When the polymer coating layer 130 includes a lithium compound, the lithium compound may be included in an amount of 1 wt% to 90 wt%, specifically 5 wt% to 50 wt%, more specifically 10 wt% to 40 wt%, and even more specifically 20 wt% to 35 wt% in the polymer coating layer. The above range is preferable in that a stable SEI layer is formed, the formation of lithium dendrites is prevented, a concentration gradient caused by lithium ion consumption on the surface of the negative electrode current collector during charging and discharging is effectively compensated for, and an increase in resistance when an excess amount of lithium compound is added is prevented. In this case, the polymer in the polymer coating layer may be included as the balance excluding the content of the lithium compound.

The porous filler may be included to supplement the electrolyte impregnability of the coating layer and improve ionic conductivity and mechanical strength.

The porous filler may include at least one selected from the group consisting of activated carbon, diatomaceous earth, fumed silica, silica, silica gel, precipitated silica, calcium carbonate, alumina, zeolite, talc, boehmite, and mica, and specifically, silica. The silica may be, for example, lithium-modified mesoporous silica.

The porous filler may have an average particle diameter ($D_{50}$) of 1 nm to 5,000 nm, specifically 5 nm to 1,000 nm, and more specifically 250 nm to 600 nm. A case in which the average particle diameter ($D_{50}$) of the porous filler falls within the above range is preferable in that the ionic conductivity of the coating layer is improved, and the slurry uniformity of a composition for forming a coating layer, which is used in preparation of the coating layer, is secured.

The porous filler may have a BET specific surface area of 10 $m^2$/g to 1,500 $m^2$/g, and specifically, 100 $m^2$/g to 600 $m^2$/g. The above range is preferable in that electrolyte impregnability is improved, and the uniformity of the coating layer is secured.

The BET specific surface area is measured by a BET method and may be specifically calculated by determining a nitrogen gas adsorption amount at a liquid nitrogen temperature (77K) using BELSORP-mini II commercially available from BEL Japan Inc.

When the polymer coating layer 130 includes a porous filler, the porous filler may be included in an amount of 1 wt% to 90 wt%, more specifically 3 wt% to 50 wt%, and more specifically 5 wt% to 30 wt% in the polymer coating layer. The above range is preferable in that the electrolyte impregnability of the coating layer, ionic conductivity and the uniformity of the coating layer are improved. In this case, the polymer in the polymer coating layer may be included as the balance excluding the content of the porous filler.

The polymer coating layer 130 may have a thickness of 0.1 $\mu$m to 150 $\mu$m, specifically 0.5 $\mu$m to 50 $\mu$m, more specifically 1 $\mu$m to 20 $\mu$m, even more specifically 2 $\mu$m to 10 $\mu$m, and still more specifically 2 $\mu$m to 5 $\mu$m. The above range is preferable in that an effect of suppressing the formation of lithium dendrites due to application of the coating layer is realized, and the volume of the negative electrode current collector including the coating layer is reduced, and thus the energy density of a secondary battery can be improved.

The polymer coating layer 130 may be formed by applying a composition for forming a polymer coating layer, which includes the coating polymer and, optionally, the lithium compound and/or the porous filler, onto the metal current collecting substrate and drying the same.

The drying temperature may be appropriately adjusted depending on the type of polymer and may be, for example, 95 °C or lower, more specifically 30 °C to 75 °C, and even more specifically 40 °C to 65 °C. In this case, the drying time may be 1 hour to 5 hours.

The drying may be performed, for example, under vacuum.

After drying, the temperature may be lowered to room temperature (specifically 20 °C to 25 °C), and then additional drying may be performed. The additional drying may be performed for, for example, 1 to 100 hours, and specifically, 24 to 80 hours.

Separator

The separator separates the negative electrode and the positive electrode and provides a passage through which lithium ions move, and any separator used as a separator in a typical lithium secondary battery may be used without particular limitation. In particular, a separator that exhibits low resistance to the movement of electrolyte ions and has an excellent electrolyte impregnation ability is preferred. Specifically, as the separator, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer or the like or a stacked structure having two or more layers thereof may be used. Also, a typical porous non-woven fabric, for example, a non-woven fabric made of high-melting-point glass fiber, polyethylene terephthalate fiber or the like may be used. Also, a coated separator including a ceramic component or a polymer material to secure heat resistance or mechanical strength may be used, and the separator may be optionally used in a single-layer or multi-layer structure.

Electrolyte

As the electrolyte used in the present invention, an organic liquid electrolyte, an inorganic liquid electrolyte, a solid polymer electrolyte, a gel-type polymer electrolyte, an inorganic solid electrolyte, a molten-type inorganic electrolyte, or the like, which is usable in the manufacture of a lithium secondary battery, may be used, but the present invention is not limited thereto.

Specifically, the electrolyte may include an organic solvent and a lithium salt.

As the organic solvent, any organic solvent that may serve as a medium through which ions involved in an electrochemical reaction of the battery can move may be used without particular limitation. Specifically, the organic solvent may be: an ester-based solvent such as methyl acetate, ethyl acetate, $\gamma$-butyrolactone, $\varepsilon$-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; a carbonate-based solvent such as dimethyl carbonate (DMC), diethyl carbonate (DEC), ethyl methyl carbonate (EMC), ethylene carbonate (EC), propylene carbonate (PC), or the like; an alcohol-based solvent such as ethyl alcohol, isopropyl alcohol, or the like; a nitrile such as R-CN (R is a C2-C20 hydrocarbon group with a linear, branched or cyclic structure and may include a double-bonded aromatic ring or an ether linkage) or the like; an amide such as dimethylformamide or the like; a dioxolane such as 1,3-dioxolane or the like; or sulfolane. Among those listed above, the carbonate-based solvent is preferred, and a mixture of a cyclic carbonate-based compound with high ion conductivity and high permittivity (e.g., EC, PC, etc.) and a linear carbonate-based compound with low viscosity (e.g., EMC, DMC, DEC, etc.), which may increase the charging/discharging performance of the battery, is more preferred. In this case, when the cyclic carbonate and the linear carbonate are mixed in a volume ratio of about 1:1 to about 1:9, excellent electrolyte performance can be exhibited.

As the lithium salt, any compound that may provide lithium ions used in a lithium secondary battery may be used without particular limitation. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. It is preferable that the lithium salt is used at a concentration ranging from 0.1 to 7 M, and specifically, 0.8 to 3.0 M. When the concentration of the lithium salt falls within the above range, the electrolyte has appropriate levels of conductivity and viscosity, and thus excellent electrolyte performance can be exhibited, and lithium ions can effectively move.

As described above, the negative electrode-free battery according to the present invention is useful in the field of portable devices such as mobile phones, laptop computers, digital cameras and the like; and electric vehicles such as hybrid electric vehicles (HEVs) and the like, and particularly may be used as a unit battery of a medium-to-large-sized battery module. Therefore, the present invention also provides a medium-to-large-sized battery module including the above-described negative electrode-free battery as a unit battery.

The medium-to-large-sized battery module may be preferably applied to power sources that require high output and large capacity, such as electric vehicles, hybrid electric vehicles, power storage devices, and the like.

Hereinafter, the present invention will be described in detail with reference to examples so that those skilled in the art can easily carry out the present invention. However, the present invention may be embodied in several different forms, and therefore, is not limited to examples described herein.

**Examples and Comparative Examples**

**Example 1: Manufacture of negative electrode-free battery**

(1) Manufacture of negative electrode current collector for negative electrode-free battery

As a metal current collecting substrate, sheet-type copper foil was prepared (length×width×thickness: 34 mm×51 mm×50 $\mu$m, volume: 0.087 ml).

A plurality of space portions were formed in the copper foil using a pin roller. Each of the plurality of space portions had a rectangular parallelepiped shape and a length, width, and thickness of 6 mm, 6 mm, and 25 $\mu$m (volume of each space portion: 0.0009 ml). Each of the plurality of space portions was patterned to be spaced apart from each other at intervals of 0.5 mm in a length direction and 1 mm in a width direction. The total volume (V in Mathematical Formula 1) of the space portion was 0.031 ml. A percentage of the total volume of the space portion relative to the volume of the metal current collecting substrate was 35.6 vol%.

Next, a polymer coating layer was formed on the metal current collecting substrate. PVdF as a polymer and $LiNO_3$ as a lithium salt were dispersed in a N-methylpyrrolidone (NMP) solvent to prepare a composition for forming a polymer coating layer (solid content: 10 wt%), the composition for forming a polymer coating layer was applied onto the metal current collecting substrate and dried under vacuum (about -0.1 MPa) at 60 °C for 2 hours, the temperature was slowly decreased to room temperature, and additional drying was performed for 70 hours to form a polymer coating layer (thickness: 2.5 $\mu$m). The polymer coating layer included 66.7 wt% of the polymer and 33.3 wt% of the lithium salt.

The metal current collecting substrate having the polymer coating layer formed thereon was used as a negative electrode current collector for a negative electrode-free battery.

(2) Manufacture of positive electrode

$LiCoO_2$ as a positive electrode active material, carbon black as a conductive material, and PVDF as a binder were mixed in a weight ratio of 96:2:2 in a NMP solvent to prepare a positive electrode slurry, and the slurry was applied onto an aluminum current collector (length×width×thickness: 33 mm×50 mm×15 $\mu$m), dried, and rolled to form a positive electrode active material layer, which was used as a positive electrode.

The positive electrode active material layer was formed at a loading amount of 23 mg/cm$^2$, and the loading weight (L in Mathematical Formula 1) of $LiCoO_2$ was 0.3795 g.

(3) Manufacture of negative electrode-free battery

An electrode assembly including the positive electrode, the negative electrode current collector for a negative electrode-free battery, and a polyethylene separator interposed between the positive electrode and the negative electrode current collector for a negative electrode-free battery was manufactured and placed in a battery case. Then, an electrolyte was injected, and the battery case was sealed to manufacture a negative electrode-free battery.

The electrolyte was prepared by mixing ethylene carbonate (EC) and ethyl methyl carbonate (EMC) in a volume ratio of 2:8 to prepare an organic solvent, adding 0.5 wt% of vinylene carbonate (VC) as an additive based on the total weight of the electrolyte, and adding $LiPF_6$ at a concentration of 1.2 mol/L as a lithium salt.

(4) Whether Mathematical Formula 1 is satisfied

1) Mathematical Formula 1

$$[\text{Mathematical Formula 1}]$$

$$0.7V \leq (n \times L \times V_{Li}) / M_p \leq 2.0V$$

In Mathematical Formula 1, V is a volume (units: ml) of the space portion, n is a value (unitless) calculated by the following Mathematical Formula 2, L is a loading weight (units: g) of the positive electrode active material in the positive electrode, $V_{Li}$ is a volume per 1 mole of lithium metal (units: ml/mol), and $M_p$ is a molar mass (units: g/mol) of the lithium transition metal oxide, and

$$[\text{Mathematical Formula 2}]$$

$$n = C_H \times M_p \times 1/96485 \text{ mol/C} \times 3600 \text{ s/h}$$

In Mathematical Formula 2, $C_H$ is a capacity (units: Ah/g) of a half-cell manufactured using the positive electrode and a lithium metal counter electrode, $M_p$ is a molar mass (units: g/mol) of the lithium transition metal oxide, C represents coulombs, s represents seconds, and h represents hours.

2) Calculation of n

In order to obtain $C_H$, a polyethylene separator was interposed between the manufactured positive electrode and lithium metal counter electrode to manufacture an electrode assembly, the electrode assembly was placed in a battery case, then an electrolyte was injected, and the battery case was sealed to manufacture a half-cell. As the electrolyte, an electrolyte prepared by adding $LiPF_6$ at a concentration of 1 M to an organic solvent in which ethylene carbonate (EC), dimethyl carbonate (DMC), and ethyl methyl carbonate (EMC) were mixed in a volume ratio of 30:40:30 was used. The half-cell was subjected to 5 cycles of charging and discharging to obtain the capacity ($C_H$: 0.2Ah/g) of the half-cell.
Charging and discharging conditions of the half-cell are as follows.

- Charging conditions: CC/CV, 0.1C charging, 4.5 V, 1/20C cut-off
- Discharging conditions: CC, 0.1C discharging, 3.0 V cut-off

The obtained $C_H$ and $M_p$ ($LiCoO_2$ molar mass of 97.9 g/mol) were substituted into Mathematical Formula 2 to obtain n (=0.73).

$$(n \times L \times V_{Li})/M_p$$

$V_{Li}$ was calculated by dividing a lithium metal density of 0.534 g/ml by a lithium metal molar mass of 6.94 g/mol ($V_{Li}$ = 0.077 ml/mol).
The calculated $(n \times L \times V_{Li})/M_p$ value was 0.0375.
4) Accordingly, in the case of the negative electrode current collector for a negative electrode-free battery of Example 1, $(n \times L \times V_{Li})/M_p$ was calculated to be 1.21 times V, which satisfies Mathematical Formula 1.

**Example 2: Manufacture of negative electrode current collector for negative electrode-free battery**

A negative electrode-free battery was manufactured in the same manner as in Example 1, except that each of the plurality of space portions was patterned to have a rectangular parallelepiped shape having a length, width, and thickness of 6 mm, 6 mm, and 20 $\mu$m (volume of each space portion: 0.00072 ml).

In this case, a percentage of the volume of the space portion relative to the volume of the metal current collecting substrate was 28.7 vol%. Also, the total volume (V in Mathematical Formula 1) of the space portion was 0.025 ml.

In the case of the negative electrode current collector for a negative electrode-free battery of Example 2, $(n \times L \times V_{Li})/M_p$ was calculated to be 1.50 times V, which satisfies Mathematical Formula 1.

**Example 3: Manufacture of negative electrode current collector for negative electrode-free battery**

A negative electrode-free battery was manufactured in the same manner as in Example 1, except that each of the plurality of space portions was patterned to have a rectangular parallelepiped shape having a length, width, and thickness of 6 mm, 6 mm, and 30 $\mu$m (volume of each space portion: 0.00108 ml).

In this case, a percentage of the volume of the space portion relative to the volume of the metal current collecting substrate was 50.6 vol%. Also, the total volume (V in Mathematical Formula 1) of the space portion was 0.044 ml.

In the case of the negative electrode current collector for a negative electrode-free battery of Example 3, $(n \times L \times V_{Li})/M_p$ was calculated to be 0.85 times V, which satisfies Mathematical Formula 1.

**Comparative Example 1: Manufacture of negative electrode current collector for negative electrode-free battery**

A negative electrode-free battery was manufactured in the same manner as in Example 1, except that each of the plurality of space portions was patterned to have a rectangular parallelepiped shape having a length, width, and thickness of 6 mm, 6 mm, and 10 $\mu$m (volume of each space portion: 0.00036 ml).

In this case, a percentage of the volume of the space portion relative to the volume of the metal current collecting substrate was 14.9 vol%. Also, the total volume (V in Mathematical Formula 1) of the space portion was 0.013 ml.

In the case of the negative electrode current collector for a negative electrode-free battery of Comparative Example 1, $(n \times L \times V_{Li})/M_p$ was calculated to be 2.88 times V, which does not satisfy Mathematical Formula 1.

**Comparative Example 2: Manufacture of negative electrode current collector for negative electrode-free battery**

A negative electrode-free battery was manufactured in the same manner as in Example 1, except that each of the plurality of space portions was patterned to have a rectangular parallelepiped shape having a length, width, and thickness of 6 mm, 6 mm, and 45 $\mu$m (volume of each space portion: 0.00162 ml).

In this case, a percentage of the volume of the space portion relative to the volume of the metal current collecting substrate was 65.5 vol%. Also, the total volume (V in Mathematical Formula 1) of the space portion was 0.057 ml.

In the case of the negative electrode current collector for a negative electrode-free battery of Comparative Example 2, $(n \times L \times V_{Li})/M_p$ was calculated to be 0.66 times V, which does not satisfy Mathematical Formula 1.

**Experimental Examples**

**Experimental Example 1: Evaluation of charge/discharge efficiency**

The manufactured negative electrode-free batteries of the examples and comparative examples were subjected to N cycles of charging and discharging at 25 °C under the following conditions, and a capacity retention rate was evaluated. A capacity retention rate graph according to the charging/discharging cycles is shown in FIG. 1, and a 10-cycle capacity retention rate is shown in Table 1 below.

The capacity retention rate was evaluated by the following equation.

Capacity retention rate (%) = {(Discharge capacity of negative electrode-free battery after N cycles) / (Initial discharge capacity of negative electrode-free battery)} $\times$ 100

(In the equation, N is an integer of 1 or more)

※ Charging and discharging conditions
Charging: CC/CV mode; 0.1C; 4.5 V, 1/20C cut-off

Discharging: CC mode; 0.1C; 3.0 V cut-off

[Table 1]

|  | Capacity retention rate (%) |
| --- | --- |
| Example 1 | 95.1 |
| Example 2 | 92.0 |
| Example 3 | 93.2 |
| Comparative Example 1 | 81.5 |
| Comparative Example 2 | 85.5 |

Referring to Table 1, it can be seen that the negative electrode-free batteries according to Examples 1 to 3 exhibit superior levels of charge/discharge efficiency and lifespan performance compared to the negative electrode-free batteries according to Comparative Examples 1 and 2.

[List of Reference Numerals]

10: negative electrode
100: negative electrode current collector for negative electrode-free battery
110: metal current collecting substrate
L: length of metal current collecting substrate
W: width of metal current collecting substrate
T: thickness of metal current collecting substrate
120: space portion
l: length of space portion
w: width of space portion
t: thickness of space portion
$i_1$, $i_2$: spacing between space portions
130: polymer coating layer

Claims

1.  A negative electrode-free battery comprising: a positive electrode; a negative electrode facing the positive electrode; a separator interposed between the positive electrode and the negative electrode; and an electrolyte,

    wherein the positive electrode includes a positive electrode active material,
    the positive electrode active material includes a lithium transition metal oxide,
    the negative electrode includes a negative electrode current collector for a negative electrode-free battery,
    the negative electrode current collector for a negative electrode-free battery includes a metal current collecting substrate,
    the metal current collecting substrate includes a space portion, at least a portion of which is exposed to an outside, and
    the following Mathematical Formula 1 is satisfied:

    [Mathematical Formula 1]

    $$0.7V \leq (n \times L \times V_{Li}) / M_p \leq 2.0V$$

    in Mathematical Formula 1, V is a volume (units: ml) of the space portion, n is a value (unitless) calculated by the following Mathematical Formula 2, L is a loading weight (units: g) of the positive electrode active material in the positive electrode, $V_{Li}$ is a volume per 1 mole of lithium metal (units: ml/mol), and $M_p$ is a molar mass (units: g/mol) of the lithium transition metal oxide;

[Mathematical Formula 2]

$$n = C_H \times M_p \times 1/96485 \text{ mol/C} \times 3600 \text{ s/h}$$

in Mathematical Formula 2, $C_H$ is a capacity (units: Ah/g) of a half-cell manufactured using the positive electrode and a lithium metal counter electrode, $M_p$ is a molar mass (units: g/mol) of the lithium transition metal oxide, C represents coulombs, s represents seconds, and h represents hours.

2. The negative electrode-free battery of claim 1, wherein
a percentage of a volume of the space portion relative to a volume of the metal current collecting substrate is from 20% to 60%.

3. The negative electrode-free battery of claim 1, wherein
the space portion has at least one shape selected from a concave shape, a cylindrical shape, and a rectangular parallelepiped shape.

4. The negative electrode-free battery of claim 1, wherein

the space portion is provided in plurality, and
the plurality of space portions are spaced apart from each other.

5. The negative electrode-free battery of claim 4, wherein
the plurality of space portions each independently have a volume of from 0.000025 ml to 0.01 ml.

6. The negative electrode-free battery of claim 1, wherein the metal current collecting substrate has a thickness of from 3 $\mu$m to 100 $\mu$m.

7. The negative electrode current collector for the negative electrode-free battery of claim 1, wherein
the metal current collecting substrate contains copper.

8. The negative electrode-free battery of claim 1, wherein
the negative electrode current collector for a negative electrode-free battery further includes a polymer coating layer disposed on at least one surface of the metal current collecting substrate.

9. The negative electrode-free battery of claim 8, wherein
the coating layer faces the separator.

10. The negative electrode-free battery of claim 8, wherein
the polymer coating layer includes at least one polymer selected from the group consisting of an acrylic polymer, polyurethane, polyurea, polyvinyl chloride, polyethylene oxide, polyacrylamide, polyacrylonitrile, polysaccharide, PEDOT:PSS, styrene-butadiene rubber, polyimide, polyvinylidene fluoride, a polyvinylidene fluoride-hexafluoro propylene copolymer, a polyvinylidene fluoride-chlorotrifluoroethylene copolymer, carboxymethyl cellulose, methyl cellulose, hydroxyethyl cellulose, hydroxypropyl cellulose, polypyrrole, and polystyrene.

11. The negative electrode-free battery of claim 8, wherein
the polymer coating layer has a thickness of from 0.1 $\mu$m to 150 $\mu$m.

[FIG. 1]

10

110(100)

L

[FIG. 2]

10

120

110
(100)

W

L

[FIG. 3]

10

120

130

100

110

L

## INTERNATIONAL SEARCH REPORT

| International application No. |
|---|
| **PCT/KR2023/021041** |

### A. CLASSIFICATION OF SUBJECT MATTER

**H01M 4/70**(2006.01)i; **H01M 10/058**(2010.01)i; **H01M 4/66**(2006.01)i; **H01M 4/525**(2010.01)i; **H01M 4/131**(2010.01)i; **H01M 10/42**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/70(2006.01); H01G 11/36(2013.01); H01G 11/46(2013.01); H01M 10/052(2010.01); H01M 10/058(2010.01); H01M 4/13(2010.01); H01M 4/1395(2010.01); H01M 4/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무음극 (anode free, anode less), 공간부 (space section), 집전체 (collector), 구리 (copper), 고분자 코팅층 (polymer coating layer), 수지상 결정 (dendrite)

### C. DOCUMENTS CONSIDERED TO BE RELEVANT

| Category* | Citation of document, with indication, where appropriate, of the relevant passages | Relevant to claim No. |
|---|---|---|
| X | JP 2019-212606 A (PANASONIC IP MANAGEMENT CORP.) 12 December 2019 (2019-12-12)<br>See abstract; paragraphs [0007], [0019], [0030], [0043], [0069]-[0070], [0089], [0094] and [0116]; and figure 2A. | 1-7 |
| Y | | 8-11 |
| Y | KR 10-2021-0136832 A (LG ENERGY SOLUTION, LTD.) 17 November 2021 (2021-11-17)<br>See abstract; paragraph [0079]; and claims 1, 4, 6 and 13. | 8-11 |
| A | KR 10-2017-0091994 A (SK INNOVATION CO., LTD.) 10 August 2017 (2017-08-10)<br>See entire document. | 1-11 |
| A | KR 10-2018-0065550 A (INNER SENSOR CO., LTD.) 18 June 2018 (2018-06-18)<br>See entire document. | 1-11 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/021041**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0099927 A (KOREA ELECTROTECHNOLOGY RESEARCH INSTITUTE) 13 August 2021 (2021-08-13)<br>  See entire document. | 1-11 |

**INTERNATIONAL SEARCH REPORT**
Information on patent family members

International application No.

**PCT/KR2023/021041**

| Patent document cited in search report | | | Publication date (day/month/year) | Patent family member(s) | | | Publication date (day/month/year) |
|---|---|---|---|---|---|---|---|
| JP | 2019-212606 | A | 12 December 2019 | CN | 110556590 | A | 10 December 2019 |
| | | | | EP | 3576186 | A1 | 04 December 2019 |
| | | | | EP | 3576186 | B1 | 31 May 2023 |
| | | | | JP | 7209256 | B2 | 20 January 2023 |
| | | | | US | 11251437 | B2 | 15 February 2022 |
| | | | | US | 2019-0372124 | A1 | 05 December 2019 |
| KR | 10-2021-0136832 | A | 17 November 2021 | CN | 114730888 | A | 08 July 2022 |
| | | | | EP | 4027413 | A1 | 13 July 2022 |
| | | | | JP | 2022-551705 | A | 13 December 2022 |
| | | | | US | 2023-0135791 | A1 | 04 May 2023 |
| | | | | WO | 2021-225417 | A1 | 11 November 2021 |
| KR | 10-2017-0091994 | A | 10 August 2017 | KR | 10-2576726 | B1 | 07 September 2023 |
| KR | 10-2018-0065550 | A | 18 June 2018 | None | | | |
| KR | 10-2021-0099927 | A | 13 August 2021 | None | | | |

Form PCT/ISA/210 (patent family annex) (July 2022)

**EP 4 611 077 A1**

**Patent documents cited in the description**

- KR 1020220181138

- KR 1020190083878